**Europäisches Patentamt**

**European Patent Office**

**Office européen des brevets**

(19)

(11) Veröffentlichungsnummer: **0 101 837**
**B1**

(12)                    # EUROPÄISCHE PATENTSCHRIFT

(45) Veröffentlichungstag der Patentschrift:
**19.02.86**

(51) Int. Cl.⁴: **B 65 G 60/00**

(21) Anmeldenummer: **83106509.9**

(22) Anmeldetag: **04.07.83**

(54) Verfahren und Vorrichtung zum Palettieren und Entpalettieren von Deckeln.

(30) Priorität: **02.08.82 DE 3228855**

(43) Veröffentlichungstag der Anmeldung:
**07.03.84 Patentblatt 84/10**

(45) Bekanntmachung des Hinweises auf die Patenterteilung:
**19.02.86 Patentblatt 86/8**

(84) Benannte Vertragsstaaten:
**AT BE CH DE FR GB IT LI NL SE**

(56) Entgegenhaltungen:
**CH - A - 476 598**
**CH - A - 582 089**
**DE - A - 1 938 538**
**DE - A - 2 424 341**
**US - A - 2 744 372**

(73) Patentinhaber: **Czajka, Werner, In den Gärten 10,**
**D-4716 Olfen (DE)**
Patentinhaber: **Klahr, Reinhard, Freiligrathstrasse,**
**D-4712 Werne (DE)**

(72) Erfinder: **Czajka, Werner, In den Gärten 10, D-4716 Olfen**
**(DE)**
Erfinder: **Klahr, Reinhard, Freiligrathstrasse,**
**D-4712 Werne (DE)**

ACTORUM AG

## Beschreibung

Die Erfindung betrifft ein Verfahren sowie eine Vorrichtung zum Palettieren oder Entpalettieren entsprechend dem Oberbegriff der Ansprüche 1 und 2.

Es ist eine Vorrichtung zum Beladen von Leerpaletten mit zerbrechlichen Kleinteilen bekannt, wobei die z. B. als Gitter ausgebildeten Kleinteile von einem aus einer Fördermaschine ankommenden Strang abgetrennt und mittels Druckluft auf eine Gleitbahn verbracht werden, wo sie im Bereich einer Ladestation mittels einer Transportvorrichtung in Fächer der einzelnen Paletten abgelegt werden. Die Zuführung der Paletten erfolgt dabei derart, dass jeweils eine Palette aus einem Stapel Leerpaletten abgezogen und über eine Transportbahn in den Bereich der Ladestation verbracht und dort beladen wird. Die gefüllte Palette wird anschliessend unter einen aus bereits gefüllten Paletten bestehenden Stapel transportiert (US-PS Nr. 2744372).

Bei der bekannten Vorrichtung müssen sowohl der Leergitterrahmen als auch der Vollgitterrahmen jeweils unter dem Stapel abgezogen bzw. unter den Stapel verbracht werden, was entsprechende Abfangvorrichtungen für die übrigen Rahmen erforderlich macht. Weiter wird als nachteilig empfunden, dass der gesamte Transport vom Leergitterrahmenstapel bis zum Vollgitterrahmenstapel in einer Linie verläuft, was zu einer grossen Baubreite der Anlage führt. Schliesslich ist die Beladeeinrichtung nicht für den erfindungsgemässen Zweck, d. h. für das Palettieren oder Entpalettieren von Dosendeckeln geeignet, weil diese sehr präzise und in hohen Stückzahlen schonend abgelegt werden müssen.

Es sind weiter Palettierungsvorrichtungen für Dosendeckel bekannt, denen jedoch erhebliche Nachteile anhaften. Ein besonderer Nachteil liegt darin, dass das zu palettierende Gut nicht schonend genug behandelt wird, so dass beispielsweise Beschädigungen am Lack auftreten. Auch ist die Zuverlässigkeit der bekannten Palettierungsvorrichtungen nicht ausreichend; insbesondere ist kein geschlossener kontinuierlicher Arbeitsgang von der Zuführung der Leerpalette bis zum Abtransport der Vollpalette bei optimalem Wirkungsgrad gegeben. Aufgabe der Erfindung ist es, hier Abhilfe zu schaffen und die vorgenannten Nachteile zu beseitigen.

Die Erfindung löst die gestellte Aufgabe bei einem Verfahren zum Palettieren oder Entpalettieren unter Verwendung einer Beladevorrichtung, wobei gestapelte Leergitterrahmen vereinzelt, in den Bereich der Beladevorrichtung verbracht und nach der Beladung als Vollgitterrahmen wieder gestapelt werden durch die kennzeichnenden Merkmale des Patentanspruches 1.

Nach dem erfindungsgemässen Verfahren kann somit ein grosser Stapel Leergitterrahmen mittels eines Gabelstaplers od. dgl. bis unmittelbar in den Zugriff der Palettieranlage verbracht werden. Hier wird dieser Stapel automatisch von der Palettieranlage übernommen, d. h. der gesamte Stapel wird zunächst in eine Position verbracht, in der mit Hilfe einer Liftanlage Gitterrahmen um Gitterrahmen einer Strangtransfereinrichtung zugeführt wird. Die Strangtransfereinrichtung entnimmt ebenfalls automatisch den von dem Deckelstapler (z. B. einem Vakuumdeckelstapler) gefüllten Deckelrinnen entsprechende Strangabschnitte und übergibt diese Strangabschnitte in einem vorbestimmten Arbeitstaktverfahren auf die jeweilige Strangtasche des Leergitterrahmens, der automatisch im Taktverfahren unter dem Beladebalken der Strangtransfereinrichtung hindurchgeführt wird. Ebenso automatisch werden nach vollständiger Befüllung die Gitterrahmen durch eine sinngemäss in Gegenrichtung arbeitende Liftanlage zu einem Stapel aufgesetzt und nach Erreichen einer bestimmten Stapelhöhe selbsttätig in einen Bereich abgefördert, der wiederum einem Gabelstapler od. dgl. zugängig ist.

Das Verfahren zur Entpalettierung vollzieht sich im wesentlichen in umgekehrter Reihenfolge, wobei sinngemäss gefüllte Gitterrahmen, d. h. zu einem Stapel aufgeschichtete Vollgitterrahmen in die Entpalettierungsanlage eingeführt, dort mittels der vorgenannten Lifteinrichtung vereinzelt und einzeln einer Strangtransfereinrichtung zugeführt werden, die die aus den Strangtaschen des Gitterrahmens entnommenen Strangabschnitte einer entsprechenden Deckelrinne zuführt.

Die erfindungsgemässe Vorrichtung kennzeichnet sich durch die Merkmale des Anspruches 2.

Dem zweiten Funktionsraum ist der dritte Funktionsraum unmittelbar nachgeschaltet, der die eigentliche Strangtransfereinrichtung beinhaltet, d. h. den Beladebalken, die Messer zum Abtrennen des Strangabschnittes sowie eine Freischubstange zur ausreichenden räumlichen Trennung des Strangabschnittes vom nachfolgenden Deckelstrang. Die Freischubstange ist deswegen von besonderer Bedeutung, weil sie es ermöglicht, dass der Deckelstapler ungestört und fortlaufend weiter arbeiten kann, während die Strangtransfereinrichtung die einzelnen Strangabschnitte umsetzt.

Dem vorgenannten dritten Funktionsraum schliesst sich ebenso in räumlicher Folge ein vierter Funktionsraum an, der den einzelnen, nunmehr gefüllten, als Vollgitterrahmen zu bezeichnenden Gitterrahmen aufnimmt und ihn dort ebenfalls in einer Abnahmeposition hält, die es der Lifteinrichtung (oder Gitterrahmentransfereinrichtung) ermöglicht, den Vollgitterrahmen mittels der vorgenannten Vorrichtung in den fünften Funktionsraum zu verbringen, der der Stapelung der Vollgitterrahmen dient. Die vorgenannten fünf Funktionsräume sind praktisch in der Form eines offenen U's angeordnet, wobei die freien Schenkelenden der U-Schenkel Eingang und Ausgang der Paletten mit den gestapelten Gitterrahmen bilden und der Steg des U's die Strangtransfereinrichtung enthält.

In weiterer Ausgestaltung der Erfindung kann dem ersten Funktionsraum des Grundgestells ein zusätzlicher Palettenstellplatz vorgeschaltet sein; ebenso dem letzten Funktionsraum des vorbeschriebenen Grundgestells ein zusätzlicher Palettenstellplatz nachgeschaltet sein; dies ermöglicht ein Zubringen bzw. Abführen der Paletten, ohne dass eine Unterbrechung des Palettierungsvorganges oder des Entpalettierungsvorganges erforderlich wird. Die beiden vorgenannten Palettenstellplätze sind mit den ihnen nach- bzw. vorgeschalteten Funktionsräumen über eine Doppelkettentransportbahn verbunden, über die der Palettentransport durchgeführt werden kann. Das Nachführen der jeweils nächsten Palette erfolgt automatisch.

Der erstgenannte Funktionsraum, der die Palette mit den Leergitterrahmen aufnimmt, ist mit dem letztgenannten Funktionsraum, der die Palette mit den Vollgitterrahmen aufnimmt, erfindungsgemäss durch eine anhebbare Doppelkettenquerbahn verbunden; dies ermöglicht den automatischen Transport der leeren Palette, auf der zuvor die Leergitterrahmen abgelegt waren, in den Funktionsraum, der der Stapelung der Vollgitterrahmen dient. Die Paletten selbst müssen also nicht mit durch die Strangtransfereinrichtung geschleust werden; dies bedeutet insbesondere eine Verringerung der Bauhöhe der Anlage.

Um den Transport des Leergitterrahmens unter der Strangtransfereinrichtung hindurch zu ermöglichen, sind der zweite, den Leergitterrahmen in Warteposition aufnehmende Funktionsraum, der dritte, die Strangtransfereinrichtung aufnehmende Funktionsraum und der vierte, den einzelnen Vollgitterrahmen aufnehmende Funktionsraum über eine durch eine Rollenkette gebildete Beladequertransportbahn verbunden. Diese Beladequertransportbahn durchläuft praktisch den gesamten Steg der im Grundriss etwa U-förmigen Palettieranlage.

Der einzelne Gitterrahmen ist vorteilhaft so ausgebildet, dass er an zwei parallel zueinander verlaufenden Längsseiten als Rechteckprofile ausgebildete Hohlprofile aufweist, die endseitig mit Zentriernocken sowie Zentrieröffnungen versehen und untereinander durch zu den Hohlprofilen orthogonal verlaufende, die Strangtaschen bildende Winkelbleche verbunden sind. Diese Gitterrahmenkonstruktion ermöglicht ein sicheres Erfassen des einzelnen Gitterrahmens durch die noch zu beschreibende Gitterrahmentransfereinrichtung; darüber hinaus erfolgt eine selbsttätige Zentrierung der einzelnen Gitterrahmen beim Stapeln.

Die Gitterrahmentransfereinrichtung bildet im Rahmen der hier vorliegenden Erfindung eine Lösung von eigenständiger erfinderischer Qualität. Sie besteht im wesentlichen aus einem in Schienen des Grundgestelles verfahrbaren Liftwagen, welcher einen heb- und senkbaren Liftrahmen trägt. Der Liftrahmen ist an Maschinentüchern aufgehängt; diese Art der Aufhängung beruhigt automatisch evtl. eintretende Pendelbewegungen beim Verfahren eines Gitterrahmens. Die Heb- und Senkvorrichtung für den Liftrahmen wird durch einen Elektromotor gebildet, dem ein entsprechendes Getriebe nachgeschaltet ist; ein zusätzliches Zwischengetriebe ist vorgesehen, damit die beiden den Liftrahmen haltenden Maschinentücher bei spiegelbildlicher Drehrichtung der die Maschinentücher aufwickelnden oder abwickelnden Achsen bewegt werden können. Der Liftrahmen selbst besteht im wesentlichen aus einem Rechteckrahmen, dessen Abmessungen im wesentlichen den Abmessungen des Gitterrahmens angepasst sind. Er trägt an seinen vier Ecken federbelastete Sperrklinken, die in seitliche Aufnahmeöffnungen der Hohlprofile des Gitterrahmens einrasten. Die federbelasteten Sperrklinken sind durch einen Pneumatikzylinder rückstellbar; dabei wirkt ein Pneumatikzylinder jeweils über einen Exzenter und entsprechende Steuerstangen auf zwei gegenüberliegende Sperrklinken.

Die Energiezuführung für die gesamte Gitterrahmentransfereinrichtung erfolgt vorteilhaft über Kabelwagen, die an einer Führungsschiene geführt sind, wobei die Führungsschiene jeweils über den ersten und zweiten sowie vierten und fünften Funktionsraum verlaufend angeordnet ist.

Von weiterer eigenständiger erfinderischer Bedeutung im Rahmen der hier vorliegenden Erfindung ist die Strangtransfereinrichtung. Sie wird im wesentlichen von einem Beladebalken gebildet, welcher höhenverstellbar und schwenkbar im Grundgestell gelagert ist. Am freien unteren Ende des Ladebalkens ist eine Deckeltransferleiste angeordnet, die ihrerseits als Hohlprofil ausgebildet ist und in ihrem Inneren einen Permanentmagneten aufnimmt. Dieser Permanentmagnet ist in eine Stellung verbringbar, in der er einen Deckel-Strangabschnitt automatisch unter der Deckeltransferleiste festhält sowie in eine zweite Stellung verbringbar, in der der Magnetismus unwirksam wird, so dass der Ladebalken mit der Deckeltransferleiste sich vom Strangabschnitt lösen kann.

Die Strangtransfereinrichtung weist weiter — und zwar bezogen auf jede von dem Deckelstapler kommende Stapelrinne — ein mit seiner Halterung am Grundgestell befestigtes angefedertes Messer auf, welches den Strangabschnitt von oben her abteilt. Die Abteilung erfolgt in dem Augenblick, in dem ein Endschalter den Impuls hierfür freigegeben hat.

Zusätzlich sind — und zwar ebenfalls für jede Deckelrinne gesondert — zwei seitliche, an einer Freischubstange befestigte Messer vorgesehen, die ebenfalls der Abteilung des Strangabschnittes dienen und den Strangabschnitt gemeinsam mit der Freischubstange mittels eines Pneumatikzylinders in eine Entnahmeposition verbringen. Diese Entnahmeposition entspricht der Position exakt unter dem Beladebalken; dies bedeutet zum einen, dass der Beladebalken den so abgeteilten Strangabschnitt exakt ergreifen kann; zum anderen kann der Deckelstapler in der Zwischenzeit ungestört weiter arbeiten.

Die Abteilung des Deckelstranges von oben sorgt für eine Lücke im Deckelstrang, um zu verhindern, dass die beiden seitlichen Messer, die dem Freischieben des Deckelstanges dienen, bei geringer Schrägstapelung der Deckel einmal vor, das andere Mal hinter den abgeteilten letzten Deckel greifen und so eine Störung des Systems verursachen könnten.

Der Beladebalken selbst wird erfindungsgemäss durch einen Pneumatikzylinder gesteuert; dieser Pneumatikzylinder ist bei Verwendung von zwei vom Deckelstapler beschickten Stapelrinnen als Zylinder mit doppeltem Hub ausgebildet, so dass jeweils ein voller Hub eine halbe Schwenkbewegung und der Hub beider Zylinder die vollständige Schwenkbewegung ermöglicht. Die Zylinder fahren somit jeweils in ihre Endlageposition.

Die gleiche Funktion könnte durch einen elektromotorischen Antrieb erreicht werden; bei diesem Verfahren würden die drei Positionen des Beladebalkens durch eine Sensorabtastung angefahren.

Die Deckeltransferleiste weist endseitig Zungen auf, mit deren Hilfe die freien Enden des Strangabschnittes zuverlässig erfasst werden können; nach Ablegen des jeweiligen Strangabschnittes bis in die Strangtaschen des zu befüllenden Gitterrahmens drücken am Grundgestell abgestützte pneumatische Andruckzylinder den Strangabschnitt kurzfristig zusammen; dies ermöglicht dem Ladebalken, sich vom Strangabschnitt zu lösen, ohne dass die Zungen hinderlich wären.

Da bei Verwendung mehrerer Deckelrinnen — beispielsweise zwei oder drei — der Ladebalken jeweils der Deckelrinne als nächstes einen Strangabschnitt entnehmen muss, die am weitesten gefüllt ist, sind im Bereich der Strangtransfereinrichtung an den Deckelrinnen Initiatoren zur Steuerung des Ladebalkens nach Massgabe der jeweiligen Befüllungsmenge der jeweiligen Deckelrinne vorgesehen. Es ist ersichtlich, dass die einzelnen Vorgänge exakt ineinandergreifen müssen, um einen zuverlässigen Funktionsablauf bis zum Abzug der gestapelten vollen Gitterrahmen zu gewährleisten. In Ausgestaltung der Erfindung ist deshalb die Rollenkette der Beladequertransportbahn, die den jeweils zu befüllenden Gitterrahmen befördert, besonders ausgebildet.

Zu diesem Zweck ist bei einer der beiden Rollenketten jeder zweite Bolzen nach aussen verlängert ausgebildet, d. h. er weist einen aussenseitig verlängerten Kettenbolzen auf, der im Zusammenwirken mit einem am Grundgestell angeordneten Initiator der Impulsgabe für den Bewegungstakt der Rollenkette dient. Das bedeutet, dass der Abstand der Gitter des Gitterrahmens auf die Kettenteilung der Rollenkette abgestimmt ist, wobei die Rollenkette wiederum in Abhängigkeit von dem Taktverfahren des Ladebalkens bzw. der gesamten Strangtransfereinrichtung arbeitet.

Um einen ungehinderten Transportdurchlauf des endgültig gefüllten Gitterrahmens und das ebenso ungehinderte Nachlaufen des nächsten zu befüllenden Gitterrahmens zu gewährleisten, sind nach Massgabe der Länge eines Gitterrahmens die verlängerten Kettenbolzen an der Rollenkette fortgelassen, d. h. die Rollenkette stoppt erst dann wieder ihre Bewegung, wenn die nächste Strangtasche sich unmittelbar unter dem Ladebalken befindet.

Nach einem anderen Verfahren könnten die verlängerten Kettenbolzen entfallen. In diesem Fall würden die Strangtaschen direkt durch Sensoren abgetastet.

Die Erfindung wird nachfolgend anhand eines Ausführungsbeispieles näher erläutert.

Es zeigen:

Fig. 1 eine schematische Darstellung des Bewegungsablaufes in der Palettierungsanlage in räumlicher Darstellung.

Fig. 2 eine Draufsicht auf die Palettierungsanlage gemäss II nach Fig. 1.

Fig. 3 eine Seitenansicht der Palettierungsanlage gemäss III nach Fig. 1.

Fig. 4 eine Vorderansicht der Palettierungsanlage gemäss IV nach Fig. 1.

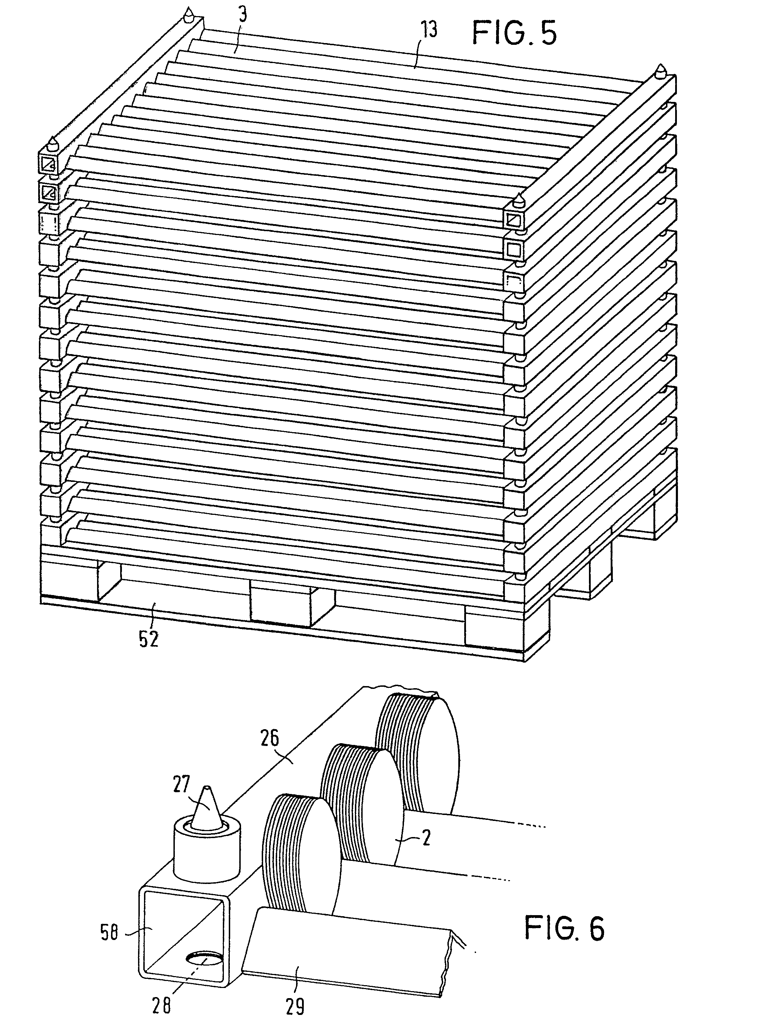

Fig. 5 in räumlicher Darstellung eine Palette mit gestapelten Leergitterrahmen.

Fig. 6 in vergrösserter, ebenfalls räumlicher Darstellung eine Einzelheit eines Leergitterrahmens nach Fig. 5.

Fig. 7 in gegenüber Fig. 2-4 vergrösserter Darstellung Einzelheiten des Liftrahmens.

Fig. 8 in vergrösserter Darstellung den Schnitt nach der Linie VIII-VIII nach Fig. 4.

Fig. 9 den Schnitt IX-IX nach Fig. 8.

Fig. 10 eine teilweise Seitenansicht des Ladebalkens.

Fig. 11 eine Draufsicht auf die Rollenkette des Beladequertransportbandes.

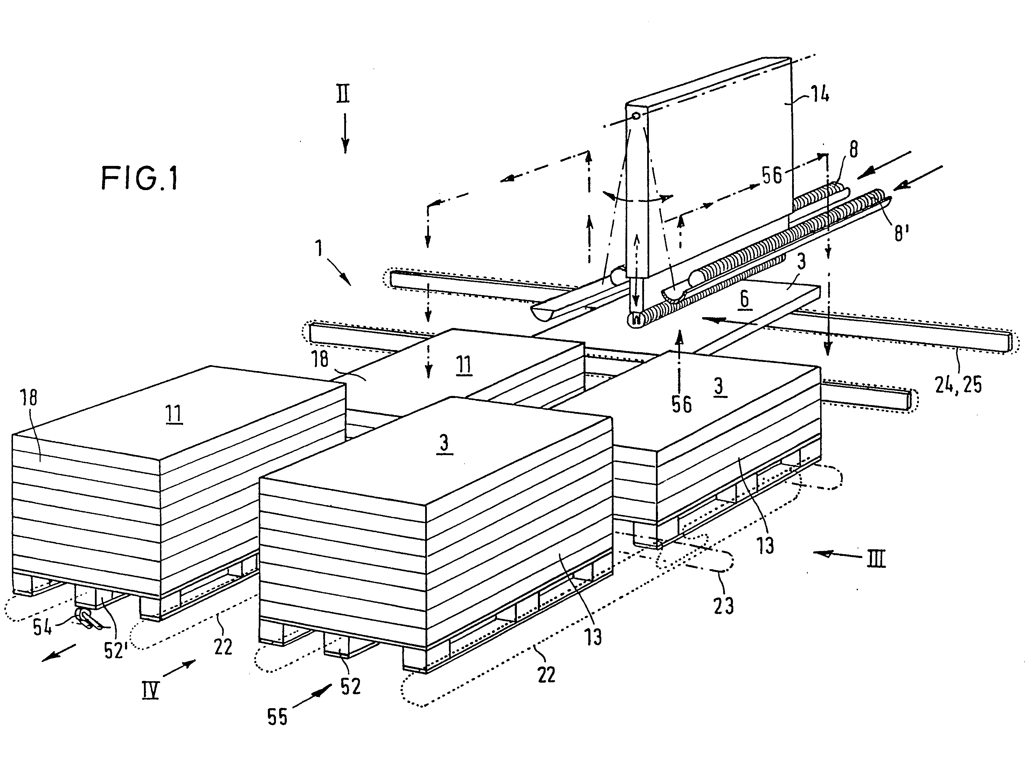

In Fig. 1 ist in räumlicher, schematisierter Darstellung der Verfahrensablauf eines Palettierungsvorganges dargestellt. Die Palettierungsanlage ist mit 1 bezeichnet. Von dem nicht gezeigten Deckelstapler führen zwei Deckelrinnen 8 und 8' in den Bereich der Strangtransfereinrichtung 6.

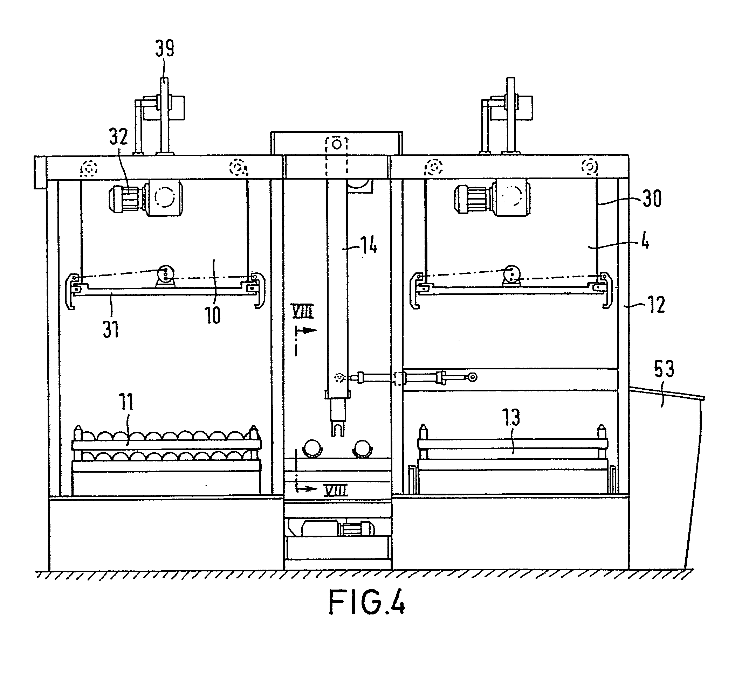

Mittels eines Gabelstaplers od. dgl. wird eine Palette 52, die mit Leergitterrahmen 3 beladen ist, in den Bereich einer Doppelkettentransportbahn 22 für den Palettentransport verbracht. Sobald der mit 13 bezeichnete Stapel von Leergitterrahmen durch die hier nicht dargestellte Rahmentransfereinrichtung entnommen worden ist, wird die Doppelkettentransportbahn 22 aktiviert und der Stapel, dessen Palette mit 52 bezeichnet worden ist, rückt in Pfeilrichtung 55 vor. Eine durch den Pfeil 56 angedeutete Rahmentransfereinrichtung verbringt den Leergitterrahmen in den Zugriffbereich der Rollenkette 24 der Beladequertransportbahn 25. Anschliessend wird der Leergitterrahmen 3 im Taktverfahren unter dem Beladebalken 14 hindurchgefahren; dabei entnimmt der Beladebalken 14 jeweils wechselweise den Deckelrinnen 8 und 8' einen Strangabschnitt und senkt ihn nach erfolgter Schwenkbewegung in die Strangtaschen 9 (s. Fig. 11) des Leergitterrahmens 3 ab. Der Leergitterrahmen verfährt dabei in der Bildebene der Fig. 1 gesehen nach links bis in eine Endposition und wird dort über eine entsprechende Gitterrahmentransfereinrichtung (Vollgitterrahmentransfereinrichtung 10, Fig. 4) in Pfeilrichtung 57 bewegt und einem Vollgitterrahmenstapel 11 zugeführt. Der Vollgitterrahmen ist mit 18 bezeichnet.

Nach Erreichen einer bestimmten Stapelhöhe, die über eine Lichtschranke überwacht wird, verfährt der so errichtete Stapel über die Doppelkettentransportbahn 22 in die Position, in der sich zuvor die zwischenzeitlich entfernte Palette 52' befunden hat. Ein Endschalter 54 sorgt dafür, dass die Doppelkettentransportbahn 22 rechtzeitig abgeschaltet wird.

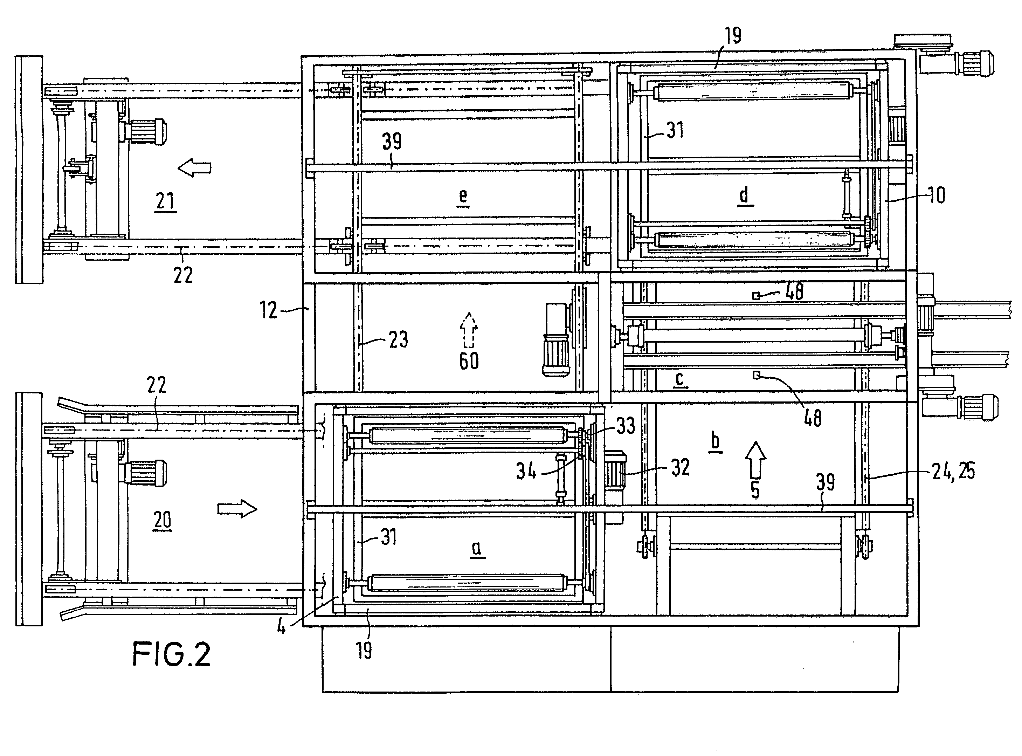

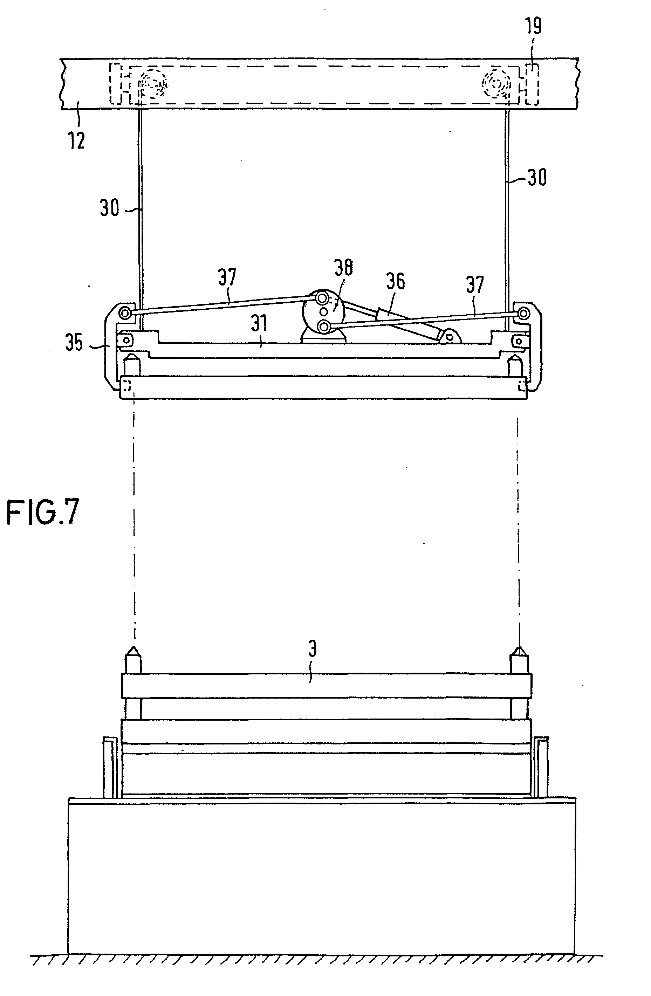

Aus den Fig. 2-4 ist entnehmbar, dass die Palettierungsanlage 1 im Grundriss etwa U-förmig aufgebaut ist (Fig. 2). Durch diesen U-förmigen Grundriss werden praktisch fünf Funktionsräume gebildet, die mit a bis e bezeichnet worden sind. Aus der Fig. 2 ist ersichtlich, dass, ausgehend vom Palettenstellplatz 20, die Palette mit den Leergitterrahmen zunächst in den Funktionsraum a verbracht wird. Dies geschieht mittels der Doppelkettentransportbahn 22. Der mit 19 bezeichnet Liftwagen nimmt mit Hilfe des Liftrahmens 31 (s. auch Fig. 7) den Leergitterrahmen auf. Beim Absenken des Liftrahmens auf den Leergitterrahmen entspannen sich die Maschinentücher 30 und geben so die federbelasteten Klinken 35 frei, die in die Aufnahmen 58 (Fig. 6) des Gitterrahmens einfassen können. Über einen Elektromotor 32, dem ein Getriebe 33 sowie ein der Umkehrrichtung dienendes Getriebe 34 nachgeschaltet ist, wird der Leergitterrahmen angehoben und anschliessend mittels eines rollenbewegten Liftwagens 19 in der Bildedene der Fig. 2 nach rechts bewegt. Die Energiezuführung erfolgt über an einer Führungsschiene 39 geführte Kabelwagen 40. Die Leergitterrahmentransfereinrichtung 4 verbringt den Leergitterrahmen in den mit b bezeichneten Funktionsraum und senkt ihn hier auf eine Warteposition etwa 30 cm über der Rollenkette 24 der Beladequertransportbahn 25 ab. Diese Position wird durch eine Lichtschranke angesteuert.

Sobald die im Funktionsraum c angeordnete Strangtransfereinrichtung 6 den weiteren Ablauf freigibt, wird der Leergitterrahmen 3 abgesenkt und von dem mit 5 bezeichneten Beladequertransport aufgenommen. Die Rollenkette 24 der Beladequertransportbahn fährt den Leergitterrahmen in den Wirkungsbereich der Strangtransfereinrichtung 6, worauf die weitere Bewegung der Rollenkette gestoppt wird, sobald die nach aussen verlängerten Achsstummel 50 den Initiator 51 am Grundgestell 12 der Palettierungsanlage 1 überfahren (s. Fig. 11). Der Beladebalken 14 entnimmt nunmehr einem der beiden Deckelrinnen 8 bzw. 8' einen Strangabschnitt 7 und legt ihn in die Strangtasche 9 des Leergitterrahmens ab. Dieser Vorgang vollzieht sich wie folgt:

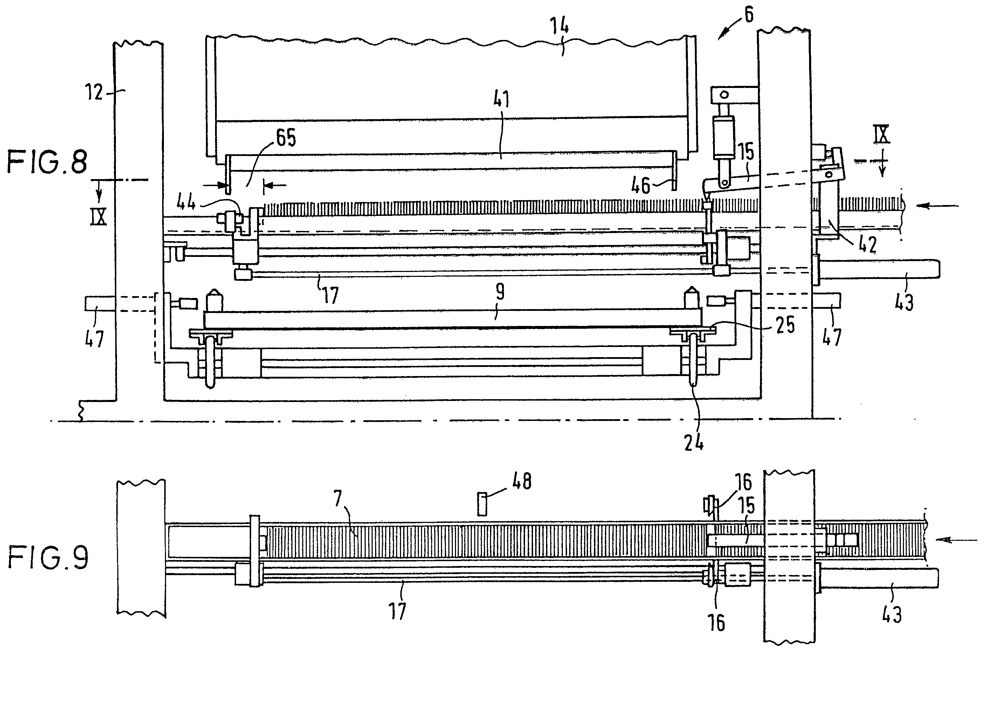

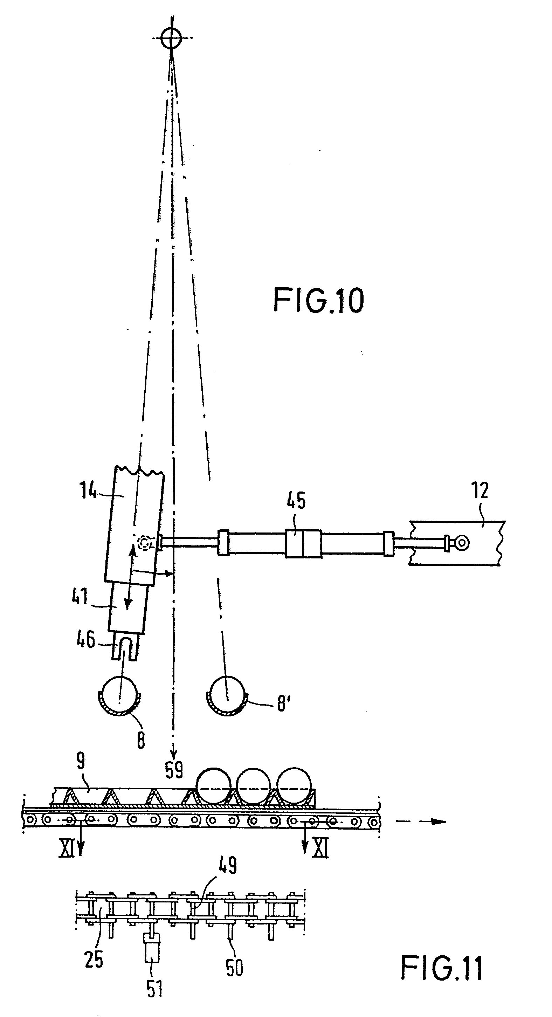

Bei Verwendung von zwei Deckelrinnen 8 und 8' nimmt der Beladebalken 14 die in der Fig. 10 dargestellte Grundstellung über der am weitesten gefüllten Deckelrinne (in diesem Falle Pos. 8) ein. Das Mass der Befüllung wird durch Initiatoren (Fig. 2, Pos. 48) überwacht. Sobald die Deckelrinne 8 ausreichend gefüllt ist (Fig. 8) wird der Endschalter 44 betätigt, der als Impulsgeber für die Abteilung des Strangabschnittes 7 dient. Dabei fährt zunächst ein oberes Messer 15, welches über eine Halterung 42 am Grundgestell 12 befestigt ist, von oben her in den aus den einzelnen Deckeln 2 gebildeten Strang ein. Anschliessend trennen zwei seitliche Messer 16 (Fig. 9), welche an einer Freischubstange 17 angeordnet sind, den Strangabschnitt vollständig ab, woraufhin die Freischubstange 17 mittels eines Pneumatikzylinders 43 gemeinsam mit dem Strangabschnitt in der Bildebene der Fig. 8 und 9 nach links in eine Position gefahren wird, in der die Zungen 46 des Beladebalkens das freie Ende des Strangabschnittes 7 aussenseitig überfassen können. Das Verschiebemass ist in der Fig. 8 mit der Bezugszahl 65 gekennzeichnet. Der Beladebalken senkt sich anschliessend auf den Strangabschnitt 7 ab, wobei sich die Deckeltransferleiste 41 des Beladebalkens auf die Deckel legt. Gleichzeitig wird über eine Hebelmechanik ein in der Deckeltransferleiste 41 angeordneter Permanentmagnet so gesteuert, dass die Deckel ohne zusätzliche Pressung von aussen unter der Transferleiste 41 gehalten werden. Der Ladebalken hebt anschliessend nach oben ab, verschwenkt zur Mitte und legt den Deckelstrang in Pfeilrichtung 59 (Fig. 10) in die hierfür vorgesehene Strangtasche 9 ab. Nach dem Absenken fahren die aus der Fig. 8 ersichtlichen pneumatischen Andruckzylinder 47, welche am Grundrahmen gelagert sind, aus und drücken den Strangabschnitt so weit zusammen, dass nach entsprechender Umschaltung des Permanentmagneten die Zungen endseitig des Strangabschnittes freigehen, so dass Ladebalken 14 und Transferleiste 41 für den nächsten Arbeitstakt abgehoben werden können. Das Abheben des Ladebalkens gibt gleichzeitig der Impuls für das Fortschreiten der Rollenkette 24 der Beladequertransportbahn 25 frei.

Aus der Fig. 10 ist weiter erkennbar, dass für die Schwenkbewegung des Ladebalkens 14 ein Pneumatikzylinder 45 Verwendung findet, der im wesentlichen aus zwei Einzelzylindern besteht, so dass jeder der beiden Zylinder die halbe der insgesamt erforderlichen Schwenkbewegung ausführen und auf diese Weise wechselweise ein Deckelstrang aus den Deckelrinnen 8 und 8' entnommen werden kann.

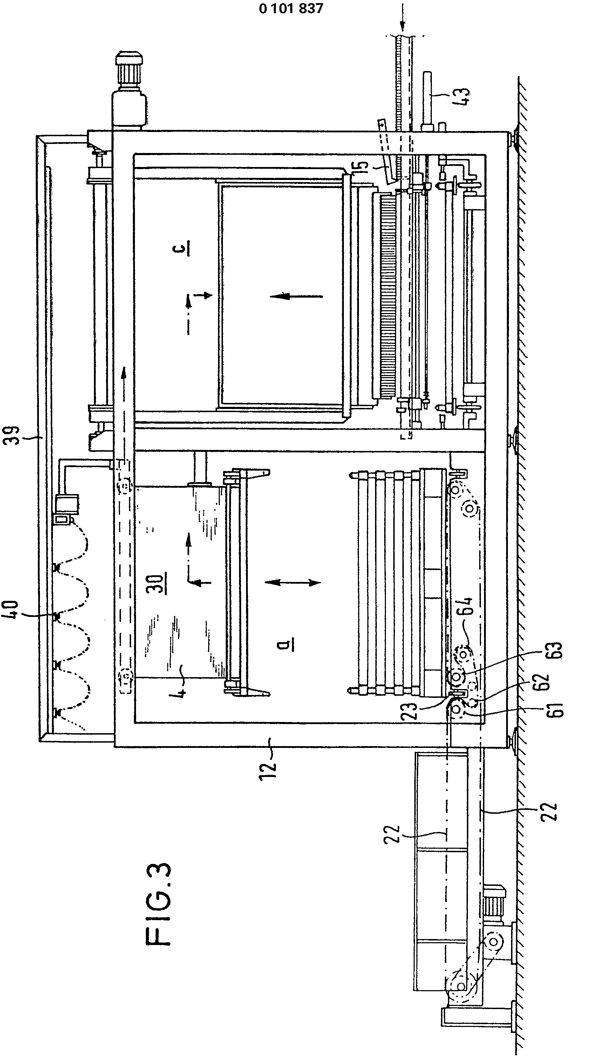

Nach Beendingung des Beladevorganges verfährt der nunmehr als Vollgitterrahmen 18 zu bezeichnende Gitterrahmen weiter in den Bereich des Funktionsraumes d und wird hier von einer analog arbeitenden Vollgitterrahmentransfereinrichtung 10 übernommen und in den Funktionsraum e verbracht, wobei die einzelnen Vollgitterrahmen 18 zu einem Vollgitterrahmenstapel 11 aufgesetzt werden. Der weitere Verlauf vollzieht sich, wie mit Bezug auf Fig. 1 beschrieben; hier ist noch anzumerken, dass die aus der Fig. 1 ersichtliche Doppelkettenquerbahn 23 anhebbar ausgebildet ist, so dass sie die Leerpaletten aus dem Raum a in Pfeilrichtung 60 (Fig. 2) unmittelbar in den Raum 3 verbringen kann. Um die Anordnung der Doppelkettenquerbahn 23 zu ermöglichen, ist die Doppelkettentransportbahn 22 für den Palettentransport (s. Fig. 3) durch wenigstens vier Umlenkräder 61, 62, 63 und 64 umgelenkt, wobei ein Umlenkkettenrad, vorzugsweise das Umlenkkettenrad 64, spannbar ausgebildet ist.

Aus der Fig. 6 ist erkennbar, dass der einzelne Gitterrahmen aus seitlich verlaufenden Hohlprofilen 26 besteht, wobei an den vier Ecken dieser Hohlprofile Zentriernokken 27 bzw. zugeordnete Zentrieröffnungen 28 angeordnet sind. Die längsverlaufenden Hohlprofile 26 sind untereinander über Winkelprofile 29 verbunden, die gleichzeitig die Strangtaschen 9 bilden.

Die in die endseitigen Aufnahmen 58 eingreifenden Sperrklinken 35 (s. Fig. 7) sind durch nicht dargestellte Federn in ihrer Verriegelungsstellung belastet; sie werden ausser Eingriff gesetzt durch den Pneumatikzylinder 36, der über den Exzenter 38 auf die Steuerstangen 37 einwirkt; die Steuerung erfolgt dabei so, dass beim Aufsetzen des Liftrahmens 31 auf einen Gitterrahmen aufgrund der Entspannung der Maschinentücher 30 der Luftzylinder 36 beaufschlagt wird und die Sperrklinken 35 einfallen.

Es bedarf keiner weiteren Erläuterung, dass die einzelnen Bewegungsabläufe im Rahmen einer Folgesteuerung ablaufen; die Erfindung bedient sich hierbei an sich bekannter Mittel.

*Bezugszeichenliste*

| | | |
|---|---|---|
| 1 | = | Palettierungsanlage |
| 2 | = | Deckel |
| 3 | = | Leergitterrahmen |
| 4 | = | Leergitterrahmentransfereinrichtung |
| 5 | = | Beladequertransport |
| 6 | = | Strangtransfereinrichtung |
| 7 | = | Strangabschnitte |
| 8, 8′ | = | Deckelrinnen |
| 9 | = | Strangtasche |
| 10 | = | Vollgitterrahmentransfereinrichtung |
| 11 | = | Vollgitterrahmenstapel |
| a | = | erster Funktionsraum |
| b | = | zweiter Funktionsraum |
| c | = | dritter Funktionsraum |
| d | = | vierter Funktionsraum |
| e | = | fünfter Funktionsraum |
| 12 | = | Grundgestell |
| 13 | = | Stapel Leergitterrahmen |
| 14 | = | Beladebalken (der Strangtransfereinrichtung 6) |
| 15 | = | oberes, den Strangabschnitt in der Deckelrinne 8, 8′ abteilendes Messer |
| 16 | = | zwei seitliche, den Strangabschnitt in der Deckelrinne 8, 8′ abteilende Messer |
| 17 | = | Freischubstange |
| 18 | = | Vollgitterrahmen |
| 19 | = | Liftwagen |
| 20 | = | Palettenstellplatz (dem Funktionsraum a vorgeschaltet) |
| 21 | = | Palettenstellplatz (dem Funktionsraum e nachgeschaltet) |
| 22 | = | Doppelkettentransportbahn für Palettentransport von 20 nach a |
| 23 | = | Doppelkettenquerbahn von a nach e für Leerpalettentransport |
| 24 | = | Rollenkette der Beladequertransportbahn 25 |
| 25 | = | Beladequertransportbahn |
| 26 | = | Hohlprofile des Gitterrahmens 3, 18 |
| 27 | = | Zentriernocken |
| 28 | = | Zentrieröffnungen |
| 29 | = | Winkelprofile |
| 30 | = | Maschinentücher |
| 31 | = | Liftrahmen (der Gitterrahmentransfereinrichtung 4, 10) |
| 32 | = | E-Motor für Betätigung der Maschinentücher |
| 33 | = | Getriebe für Betätigung der Maschinentücher |
| 34 | = | Zwischengetriebe für Betätigung der Maschinentücher |
| 35 | = | federbelastete Sperrklinken |
| 36 | = | Pneumatikzylinder für Rückstellung der Sperrklinken 35 |
| 37 | = | Steuerstangen |
| 38 | = | Exzenter |
| 39 | = | Führungsschiene für Kabelwagen 40 |
| 40 | = | Kabelwagen |
| 41 | = | Deckeltransferleiste am Beladebalken 14 |
| 42 | = | Halterung des oberen Messers 15 am Grundgestell 12 |
| 43 | = | Pneumatikzylinder für die Bewegung der Freischubstange 17 |
| 44 | = | Endschalter für Impulsgabe zur Abteilung des Strangabschnittes 7 |
| 45 | = | Pneumatikzylinder für Schwenkbewegung des Beladebalkens 14 |
| 46 | = | Zungen an der Deckeltransferleiste 41 |
| 47 | = | pneumatischer Andruckzylinder am Grundgestell 12 befestigt |
| 48 | = | Initiatoren zur Überwachung der Befüllungsmenge der Deckelrinnen 8, 8′ |
| 49 | = | jeder zweite Bolzen der Rollenkette 24 |
| 50 | = | aussenseitig verlängerter Achsstummel |
| 51 | = | Initiator am Grundgestell 12 für Takt der Rollenkette 24 |
| 52 | = | Palette |
| 53 | = | Steuerpult |
| 54 | = | Endschalter |
| 55 | = | Pfeilrichtung |
| 56 | = | Pfeilrichtung |
| 57 | = | Pfeilrichtung |
| 58 | = | Aufnahme im Gitterrahmen |
| 59 | = | Pfeilrichtung |
| 60 | = | Pfelrichtung |
| 61 | = | Umlenkkettenrad |
| 62 | = | Umlenkkettenrad |
| 63 | = | Umlenkkettenrad |
| 64 | = | Umlenkkettenrad (spannbar) |
| 65 | = | Verschiebemass |

**Patentansprüche**

1. Verfahren zum Palettieren oder Entpalettieren unter Verwendung einer Beladevorrichtung (14-17), wobei gestapelte Leergitterrahmen (3) vereinzelt, in den Bereich der Beladevorrichtung verbracht und nach der Beladung als Vollgitterrahmen (18) wieder gestapelt werden, dadurch gekennzeichnet, dass zum Zwecke des Palettierens von Deckeln (2) unter Verwendung eines Deckelstaplers sowie unter Verwendung von Leergitterrahmen (3), die jeweils eine Reihe Strangtaschen (9) aufweisen, wie folgt verfahren wird:
a) Anordnung eines Stapels (13) von Leergitterrahmen (3) in dem Aufnahmebereich einer einen Liftwagen (19) aufweisenden Leergitterrahmen-Transfereinrichtung (4);

b) Überführung der Leergitterrahmen (3) einzeln nacheinander nach Massgabe des Befüllungsvorganges mittels der Leergitterrahmen-Transfereinrichtung (4) zu einer Beladequertransportbahn (25), wobei die Leergitterrahmen (3) mittels des Liftwagens (19) vom Stapel (13) einzeln abgehoben und an die Beladequertransportbahn (25) übergeben werden;

c) Beladung des in der Beladequertransportbahn (25) befindlichen Leergitterrahmens (3) mittels einer Strangtransfereinrichtung (6), welche aus wenigstens einer Deckelrinne (8, 8') des Deckelstaplers in Aufeinanderfolge abgeteilte Strangabschnitte (7) der Deckel (2) entnimmt und in die jeweils nächstfolgende leere Strangtasche (9) des Leergitterrahmens (3) fortlaufend ablegt, bis der beladene Gitterrahmen als Vollgitterrahmen (18) in den Bereich einer einen Liftwagen (19) aufweisenden Vollgitterrahmentransfereinrichtung (10) gelangt;

d) Überführung des Vollgitterrahmens (18) von der Beladequertransportbahn (25) mittels der Vollgitterrahmentransfereinrichtung (10) in eine Stapelposition, in der die Vollgitterrahmen (18) zu einem Stapel (10) gestapelt werden;

e) wobei zum Entpalettieren in umgekehrter Reihenfolge (d-a) verfahren wird.

2. Vorrichtung zum Palettieren oder Entpalettieren unter Verwendung eines im wesentlichen fünf Funktionsräume (a-e) aufweisenden Grundgestells (12), wobei der erste Funktionsraum (a) einen Stapel Leergitterrahmen (13), der zweite Funktionsraum (b) einen einzelnen Leergitterrahmen (3), der dritte Funktionsraum (c) eine Beladevorrichtung (14-17), der vierte Funktionsraum (d) einen Vollgitterrahmen (18) und der fünfte Funktionsraum (e) einen Vollgitterrahmenstapel (11) aufnimmt, gekennzeichnet durch a) eine Vorrichtung zum Palettieren von Deckeln (2) unter Verwendung eines Deckelstaplers sowie unter Verwendung von Strangtaschen (9) aufweisenden Leergitterrahmen (3);

b) eine zwischen dem ersten Funktionsraum (a) und dem zweiten Funktionsraum (b) angeordnete, einen Liftwagen (19) aufweisende Leergitterrahmentransfereinrichtung (4);

c) eine im dritten Funktionsraum (c) angeordnete Strangtransfereinrichtung (6) zur Beladung der einzelnen Leergitterrahmen (3) mit Strangabschnitten (7) der Deckel (2);

d) eine zwischen dem vierten Funktionsraum (d) und dem fünften Funktionsraum (e) angeordnete, einen Liftwagen (19) aufweisende Vollgitterrahmentransfereinrichtung (10);

e) eine den zweiten, dritten und vierten Funktionsraum verbindende Beladequertransportbahn (25).

3. Vorrichtung nach Anspruch 2, dadurch gekennzeichnet, dass die im dritten Funktionsraum (c) angeordnete Strangtransfereinrichtung (6) einen Beladebalken (14), ein Trennmesser (15) sowie eine Freischubstange (17) aufweist.

4. Vorrichtung nach Anspruch 2-3, dadurch gekennzeichnet, dass dem ersten Funktionsraum (a) des Grundgestelles (12) ein Palettenstellplatz (20) vorgeschaltet und dem letzten Funktionsraum (e) des Grundgestelles ein Palettenstellplatz (21) nachgeschaltet ist.

5. Vorrichtung nach Anspruch 4, dadurch gekennzeichnet, dass die Funktionsräume mit den Palettenstellplätzen (a mit 20 bzw. e mit 21) über eine den Palettentransport ermöglichende Doppelkettentransportbahn (22) verbunden sind.

6. Vorrichtung nach Anspruch 4, dadurch gekennzeichnet, dass die beiden Funktionsräume (a und e) untereinander durch eine dem Leerpalettentransport dienende anhebbare Doppelkettenquerbahn (23) verbunden sind.

7. Vorrichtung nach Anspruch 2-6, dadurch gekennzeichnet, dass der zweite, den Leergitterrahmen (3) in Warteposition aufnehmende Funktionsraum (6), der dritte, die Strangtransfereinrichtung (6) aufnehmende Funktionsraum (c) und der vierte, den einzelnen Vollgitterrahmen (18) aufnehmende Funktionsraum (d) über eine durch eine Rollenkette (24) gebildete Beladequertransportbahn (25) verbunden sind.

8. Vorrichtung nach Anspruch 2-7, dadurch gekennzeichnet, dass der Gitterrahmen (3, 18) an zwei parallel zueinander verlaufenden Längsseiten als Rechteckprofile ausgebildete Hohlprofile (26) aufweist, die endseitig mit Zentriernocken (27) sowie Zentrieröffnungen (28) versehen und untereinander durch zu den Hohlprofilen orthogonal verlaufende, die Strangtaschen (9) bildende Winkelprofile (29) verbunden sind.

9. Vorrichtung nach Anspruch 2-8, dadurch gekennzeichnet, dass die Gitterrahmentransfereinrichtung (4, 10) einen in Schienen des Grundgestelles verfahrbaren Liftwagen (19) aufweist, welcher einen an Maschinentüchern (30) aufgehängten Liftwagen (31) trägt.

10. Vorrichtung nach Anspruch 9, dadurch gekennzeichnet, dass die Heb- und Senkvorrichtung der Maschinentücher aus einem Elektromotor (32) mit nachgeschaltetem Getriebe (33) und zusätzlichem Zwischengetriebe (34) für die Drehrichtungsumkehr besteht.

11. Vorrichtung nach Anspruch 9 und 10, dadurch gekennzeichnet, dass der Liftrahmen (31) federbelastete Sperrklinken (35) für die Aufnahme (58) der Gitterrahmen (3, 18) aufweist.

12. Vorrichtung nach Anspruch 9-11, dadurch gekennzeichnet, dass die federbelasteten Sperrklinken (35) des Liftrahmens (31) durch einen Pneumatikzylinder (36) rückstellbar sind.

13. Vorrichtung nach Anspruch 9-12, dadurch gekennzeichnet, dass die Betätigung der Sperrklinken (35) über einen vom Pneumatikzylinder (36) betätigten, auf zwei Steuerstangen (37) einwirkenden Exzenter (38) erfolgt.

14. Vorrichtung nach Anspruch 9-13, dadurch gekennzeichnet, dass die Energiezuführung für die Gitterrahmentransfereinrichtung (4, 10) über an einer Führungsschiene (39) geführte Kabelwagen (40) erfolgt.

15. Vorrichtung nach Anspruch 2-3, dadurch gekennzeichnet, dass die Strangtransfereinrichtung (6) einen höhenverstellbar und schwenkbar im Grundgestell (12) gelagerten Beladebalken (14) aufweist, an dessen freiem unterem Ende eine Deckeltransferleiste (41) angeordnet ist.

16. Vorrichtung nach Anspruch 15, dadurch gekennzeichnet, dass die Deckeltransferleiste (41) einen wahlweise in Wirkstellung verbringbaren Permanentmagneten (nicht dargestellt) aufnimmt.

17. Vorrichtung nach Anspruch 15 und 16, dadurch gekennzeichnet, dass der Strangtransfereinrichtung (6) für jede Deckelrinne (8, 8') ein angefedertes oberes, den Strangabschnitt (17) abteilendes Messer (15) zugeordnet ist, welches mit seiner Halterung (42) am Grundgestell (12) befestigt ist.

18. Vorrichtung nach Anspruch 15-17, dadurch gekennzeichnet, dass der Strangtransfereinrichtung (6) für jede Deckelrinne zwei seitliche, an einer Freischubstange (17) befestigte, den Strangabschnitt (7) abteilende und denselben gemeinsam mit der Freischubstange in eine Entnahmeposition verbringende Messer (16) zugeordnet sind.

19. Vorrichtung nach Anspruch 15-18, dadurch gekennzeichnet, dass die Bewegung der Freischubstange (17) durch einen Pneumatikzylinder (43) erfolgt.

20. Vorrichtung nach Anspruch 15-19, dadurch gekennzeichnet, dass die Abteilung des Strangabschnittes (7) durch Impulsgabe eines Endschalters (44) erfolgt.

21. Vorrichtung nach Anspruch 15-20, dadurch gekennzeichnet, dass die Schwenkbewegung des Beladebalkens (14) durch einen Pneumatikzylinder (45) mit doppeltem Hub gesteuert wird.

22. Vorrichtung nach Anspruch 15-21, dadurch gekennzeichnet, dass die Deckeltransferleiste (41) endseitige Zungen (46) zur Erfassung der freien Enden des Strangabschnittes (7) aufweist.

23. Vorrichtung nach Anspruch 15-22, dadurch gekennzeichnet, dass im Bereich der jeweils zu befüllenden Strangtasche (9) des Gitterrahmens (3, 18) am Grundgestell (12) abgestützte pneumatische Andruckzylinder (27) vorgesehen sind.

24. Vorrichtung nach Anspruch 15-23, dadurch gekennzeichnet, dass bei Verwendung mehrerer Deckelrinnen (8, 8') jeder Deckelrinne im Bereich der Strangtransfereinrichtung (6) Initiatoren (48) zur Steuerung des Beladebalkens (14) nach Massgabe der Befüllungsmenge der jeweiligen Deckelrinne zugeordnet sind.

25. Vorrichtung nach Anspruch 7, dadurch gekennzeichnet, dass jeder zweite Bolzen (49) der Rollenkette (24) der Beladequertransportbahn (25) als aussenseitig verlängerter Achsstummel (50) ausgebildet ist und im Zusammenwirken mit einem am Grundgestell (12) angeordneten Initiator (51) der Impulsgabe für den Bewegungstakt der Rollenkette dient.

26. Vorrichtung nach Anspruch 7-25, dadurch gekennzeichnet, dass der Abstand der Gitter des Gitterrahmens (3, 18') auf die Kettenteilung der Rollenkette (24) abgestimmt ist.

27. Vorrichtung nach Anspruch 7, 25 und 26, dadurch gekennzeichnet, dass nach Massgabe der Länge eines Gitterrahmens (3, 18) die Achsstummel (15) an der Rollenkette (24) zur Erzielung eines ungehinderten Transportdurchlaufes des gefüllten Gitterrahmens entfallen.

28. Vorrichtung nach Anspruch 7, gekennzeichnet durch eine jeder einzelnen Strangtasche (9) zugeordnete Abtastvorrichtung zum Zwecke der Impulsgabe für den Bewegungstakt der Rollenkette (24).

## Claims

1. Method of palletising or de-palletising, using an onloading apparatus (14-17), stacked empty lattice frames (3) being brought singly into the region of the onloading apparatus and, after the onloading operation, stacked again as full lattice frames (18), characterised in that, for the palletising of lids (2) with the use of a lid stacker and also with the use of empty lattice frames (3) each of which have a row of series compartments (9), the following procedure is adopted:

a) arrangement of a stack (13) of empty lattice frames (3) in the take-up region of an empty lattice frame transfer device (4) comprising a lift carriage (19);

b) transferring the empty lattice frames (3) singly one after the other in accordance with the filling operation by means of the empty lattice frame transfer device (4) to an onloading transverse conveyer line (25), the empty lattice frames (3) being individually lifted from the stack (13) by means of the lift carriage (19) and passed to the onloading transverse conveyor line (25);

c) onloading the empty lattice frame (3) situated in the onloading transverse conveyor line (25) by means of a series transfer device (6) which takes blocks (7) of lids (2) divided off successively from a line or series of lids out of at least one lid channel (8, 8') of the lid stacker, and continuously deposits them in the next-in-succession empty series compartment (9) of the empty lattice frame (3), until the onloaded lattice frame passes as a full lattice frame (18) into the region of a full lattice frame transfer device (10) provided with a lift carriage (19);

d) transferring the full lattice frame (18) from the onloading transverse conveyor line (25) by means of the full lattice frame transfer device (10) into a stacking position wherein the full lattice frames (18) are piled up to form a stack (10);

e) the procedure being carried out in the reverse order (d-a) for de-palletising.

2. Apparatus for palletising or de-palletising, using a main frame (12) having substantially five function areas (a-e), the first function area (a) having a stack of empty lattice frames (13), the second function area (b) a single empty lattice frame (3), the third function area (c) an onloading apparatus (14-17), the fourth function area (d) a full lattice frame (18), and the fifth function area (e) a full lattice frame stack (11), characterised by

a) an apparatus for the palletising of lids (2), using a lid stacker and also using empty lattice frames (3) comprising series compartments (9);

b) an empty lattice frame transfer device (4) which is arranged between the first function area (a) and the second function area (b) and which has a lift carriage (19);

c) a series transfer device (6) arranged in the third function area (c) for onloading series blocks (7) of lids (2) on to the individual empty lattice frames (3);

d) a full lattice frame transfer device (10) which is arranged between the fourth function area (d) and the fifth function area (e) and which has a lift carriage (19);

e) an onloading transverse conveyor line (25) which connects the second, third and fourth function areas.

3. Apparatus according to Claim 2, characterised in that the series transfer device (6) which is arranged in the third function area (c) comprises an onloading beam (14), a separating knife (15), and a free slide rod (17).

4. Apparatus according to Claims 2-3, characterised in that the first function area (a) of the main frame (12) is preceded by a pallet accommodation site (20), and the last function area (e) of the main frame is followed by a pallet accommodation site (21).

5. Apparatus according to Claim 4, characterised in that the function areas are connected with the pallet accommodation sites (a to 20 and e to 21 respectively) via a double chain conveyor line (22) provided for pallet transport.

6. Apparatus according to Claim 4, characterised in that the two function areas (a and e) are connected to one another by a liftable double-chain transverse line (23) used for transporting empty pallets.

7. Apparatus according to Claims 2-6, characterised in that the second function area (6) accommodating the empty lattice frame (3) in the waiting position, the third function area (c) accommodating the series transfer device (6), and the fourth function area (d) accommodating the single full lattice frame (18), are connected via an onloading transverse conveyor line (25) formed by a roller chain system (24).

8. Apparatus according to Claims 2-7, characterised in that the lattice frame (3, 18) comprises at two longitudinal sides which are parallel to one another hollow section elements (26) which are constructed as rectangular section elements and which are provided at the ends with centring studs (27) and with centring apertures (28), and are connected to one another by angle section elements (29) which are disposed at right angles to the hollow section elements and which form the series compartments (9).

9. Apparatus according to Claims 2-8, characterised in that the lattice frame transfer device (4, 10) has a lift carriage (19) which is mobile in rails of the main frame and which supports a lift carriage (31) suspended on machine fabric webs (30).

10. Apparatus according to Claim 9, characterised in that the lifting and lowering apparatus of the machine fabric webs comprises an electric motor (32) with a gearbox (33) at its output end, and an additional intermediate gear (34) for reversing the direction of rotation.

11. Apparatus according to Claims 9 and 10, characterised in that the lift frame (31) comprises spring-loaded latches (35) for the reception means (58) of the lattice frames (3, 18).

12. Apparatus according to Claims 9-11, characterised in that the spring-loaded latches (35) of the lift frame (31) are restorable by means of a pneumatic cylinder (36).

13. Apparatus according to Claims 9-12, characterised in that the operation of the latches (35) is effected by means of an eccentric (38) which is actuated by the pneumatic cylinder (36) and which acts on two control rods (37).

14. Apparatus according to Claims 9-13, characterised in that the supplying of energy for the lattice frame transfer device (4, 10) is effected by way of cable reel trolleys (40) guided on a guide rail (39).

15. Apparatus according to Claims 2-3, characterised in that the series transfer device (6) comprises an onloading beam (14) which is mounted in vertically adjustable and pivotably movable manner in the main frame (12) and on whose free lower end a lid transfer bar (41) is arranged.

16. Apparatus according to Claim 15, characterised in that the lid transfer bar (41) accommodates a permanent magnet (not shown) which can be brought selectively into an operating position.

17. Apparatus according to Claims 15 and 16, characterised in that there is associated with the series transfer device (6) for each lid channel (8, 8') a sprung upper knife (15) which divides off the desired block (17) from the series, and which is secured with its holder (42) on the main frame (12).

18. Apparatus according to Claims 15-17, characterised in that two lateral knives (16) which are secured on a free slide rod (17) and which divide a block (7) from the series and jointly with the free slide rod bring it into a removal position are associated with the series transfer device (6) for each lid channel.

19. Apparatus according to Claims 15-18, characterised in that the moving of the free slide rod (17) is effected by a pneumatic cylinder (43).

20. Apparatus according to Claims 15-19, characterised in that the dividing-off of the block (7) from the series is effected by signal emission from a limit switch (44).

21. Apparatus according to Claims 15-20, characterised in that the pivotable movement of the onloading beam (14) is controlled by a double-acting pneumatic cylinder (45).

22. Apparatus according to Claims 15-21, characterised in that the lid transfer bar (41) has end tongues (46) for engaging on the free ends of the series block (7).

23. Apparatus according to Claims 15-22, characterised in that in the region of that series compartment (9) of the lattice frame (3, 18) which is to be filled at the time in question pneumatic pressure application cylinders (27) are provided which are supported on the main frame (12).

24. Apparatus according to Claims 15-23, characterised in that when using a plurality of lid channels (8, 8') initiators (48) are associated with each lid channel in the region of the series transfer device (6), for controlling the onloading beam (14) in accordance with the extent of the filling of the respective lid channel.

25. Apparatus according to Claim 7, characterised in that each second pin (49) of the roller chain (24) of the onloading transverse conveyor line (25) is constructed as an externally prolonged stub axle (50) and serves, in co-operation with an initiator (51) arranged on the main frame (12), for signal emission for the movement step of the roller chain.

26. Apparatus according to Claims 7-25, characterised in that the spacing of the lattices of the lattice frames (3, 18') is adjusted to the chain pitch of the roller chain (24).

27. Apparatus according to Claims 7, 25 and 26, characterised in that in accordance with the particular length of a lattice frame (3, 18) the stub axles (15) on the roller chain (24) are omitted, to allow unhindered through transporting of the filled lattice frame.

28. Apparatus according to Claim 7, characterised by a sensing device associated with each individual series compartment (9) for purposes of signal emission for the movement phase of the roller chain (24).

## Revendications

1. Procédé de palettisation ou de dépalettisation au moyen d'un dispositif de chargement (14-17), dans lequel des châssis à grilles vides (3) empilés, sont séparés amenés dans la zone du dispositif de chargement et son réempilés, après le chargement, sous la forme de châssis à grilles complet (18), caractérisé en ce que, pour effectuer la palettisation de couvercle (2) en utilisant un dispositif d'empilage de couvercles, ainsi que des châssis à grilles vides (3) qui comportent chacun une série de poches de logement de piles (9), on procède de la façon suivante:

a) on dispose une pile (13) de châssis à grilles vides (3) dans la zone de réception d'un dispositif de transfert de châssis à grilles vides (4) comportant un chariot élévateur (19);

b) on fait passer les châssis à grilles vides (3) séparément l'un après l'autre, au rythme du processus de remplissage, au moyen du dispositif de transfert de châssis à grilles vides (4), sur un transporteur de chargement transversal (25), les châssis à grilles vides (3) étant soulevés séparément de la pile (13) au moyen du chariot élévateur (19) et étant transférés sur le transporteur transversal de chargement (25);

c) on charge le châssis à grilles vides (3) se trouvant dans le transporteur transversal de chargement (25) au moyen d'un dispositif de transfert de files (6) qui prélève, dans au moins une gouttière de réception des couvercles (8, 8') du dispositif d'empilement de couvercles, des sections (7) de files de couvercles (2) séparées successivement et les dépose dans la poche de logement de files vide suivante (9) du châssis à grilles vide (3) en continu, jusqu'à ce que le châssis à grilles chargé parvienne, sous la forme d'un châssis de grilles plein (18), dans la zone d'un dispositif de transfert de châssis à grilles pleines (10) comportant un chariot élévateur (19);

d) on fait passer le châssis à grilles plein (18) du transporteur transversal de chargement (25), au moyen du dispositif de transfert de châssis à grilles pleins (10), dans une position d'empilage dans laquelle les châssis à grilles pleins (18) sont empilés en une pile (10);

e) et l'on procède dans l'ordre inverse (d à a) pour la dépalettisation.

2. Dispositif de palettisation ou de dépalettisation au moyen d'un bâti de base (12) comportant essentiellement cinq compartiments fonctionnels (a à e), le premier compartiment fonctionnel (a) logeant une pile de châssis à grilles vides (13), le second compartiment fonctionnel (b) logeant un châssis à grilles séparé (3), le troisième compartiment fonctionnel (e) logeant un dispositif de chargement (14-17), le quatrième compartiment fonctionnel (d) logeant un châssis à grilles plein (18) et le cinquième compartiment fonctionnel (e) logeant une pile de châssis à grille pleins (11), caractérisé par:

a) un dispositif de palettisation de couvercles (2) au moyen d'un dispositif d'empilage de couvercles et de châssis à grilles vides (3) comportant des logements de files (9);

b) un dispositif de transfert de châssis à grilles vides (4) comportant un chariot élévateur (19) placé entre le premier compartiment fonctionnel et le second compartiment fonctionnel (b);

c) un dispositif de transfert de piles (6) placé dans le troisième compartiment (c) pour charger chacun des châssis à grille vides (3) avec des sections (7) de files de couvercles (2);

d) un dispositif de transfert de châssis à grilles pleins (10) comportant un chariot élévateur (19), placé entre le quatrième compartiment (d) et le cinquième compartiment (e);

e) un transporteur transversal de chargement (25) reliant les second, troisième et quatrième compartiments fonctionnels.

3. Dispositif selon la revendication 2, caractérisé en ce que le dispositif de transfert de files (6) placé dans le troisième compartiment (c) comporte un bras de chargement (14), une lame de séparation (15) et une bielle mobile (17).

4. Dispositif selon les revendications 2 et 3, caractérisé en ce que le premier compartiment fonctionnel (a) du bâti de base (12) est précédé par un emplacement de pose de palettes (20) et en ce que le dernier compartiment fonctionnel (e) du bâti de base est suivi par un emplacement de pose de palettes (21).

5. Dispositif selon la revendication 4, caractérisé en ce que les compartiments fonctionnels sont reliés aux emplacements de pose de palettes (a à 20 et e à 21) par l'intermédiaire d'un transporteur à double chaîne permettant le transport des palettes.

6. Dispositif selon la revendication 4, caractérisé en ce que les deux compartiments (a et e) sont reliés mutuellement par un transporteur transversal à double chaîne (23) pouvant être soulevé, servant au transport des palettes vides.

7. Dispositif selon les revendications 2 à 6, caractérisé en ce que le second compartiment (b) logeant le châssis à grilles vides (3) en position d'attente, le troisième compartiment (c) logeant le dispositif de transfert des files (6) et le quatrième compartiment (d) logeant le châssis à grilles plein séparés (18) sont reliés par l'intermédiaire d'un transporteur transversal de chargement (25) réalisé sous la forme d'une chaîne à rouleaux (24).

8. Dispositif selon les revendications 2 à 7, caractérisé en ce que le châssis à grilles (3, 18) comporte, sur deux grands côtés parallèles entre eux, des profils creux (26) réalisés sous la forme de profils rectangulaires, qui comportent en bout des cames de centrage (27) ainsi que des ouvertures de centrage (28) et sont reliés entre eux par des cornières (29) orthogonales aux profils creux, formant les poches de logement des files.

9. Dispositif selon les revendications 2 à 8, caractérisé en ce que le dispositif de transfert de châssis à grilles (4, 10) comporte un chariot élévateur (19) pouvant se déplacer sur des rails du bâti de base qui comporte un châssis élévateur (31) suspendu à des tabliers (30).

10. Dispositif selon la revendication 9, caractérisé en ce que le dispositif d'élévation et d'abaissement des tabliers comprend un moteur électrique (32) suivi par une transmission (33) et une transmission intermédiaire supplémentaire (34) pour l'inversion du sens de rotation.

11. Dispositif selon les revendications 9 et 10, caractérisé en ce que le châssis élévateur (31) comporte des cliquets d'arrêt (35) soumis à l'action de ressorts pour pénétrer dans des logements (58) des châssis à grilles (3, 18).

12. Dispositif selon les revendications 9 à 11, caractérisé en ce que les cliquets d'arrêt (35) du châssis élévateur (31), soumis à l'action de ressorts, peuvent être rappelés par un vérin pneumatique (36).

13. Dispositif selon les revendications 9 à 12, caractérisé en ce que les cliquets (35) sont actionnés par l'intermédiaire d'un excentrique (38) actionné par le vérin pneumatique (36), agissant sur deux barres de commande (37).

14. Dispositif selon les revendications 9 à 13, caractérisé en ce que l'alimentation en énergie du dispositif de transfert de châssis à grilles (4, 10) est effectuée par l'intermédiaire d'un chariot à câble (40) guidé sur un rail de guidage (39).

15. Dispositif selon les revendications 2 et 3, caractérisé en ce que le dispositif de transfert de files (6) comporte un bras de chargement (14) placé dans le bâti de base (12) de façon à pouvoir se déplacer en hauteur et pivoter à l'extrémité inférieure libre duquel se trouve une barre de transfert de couvercles (41).

16. Dispositif selon la revendication 15, caractérisé en ce que la barre de transfert de couvercles (41) loge un aimant permanent (non représenté) pouvant être mis à volonté en position active.

17. Dispositif selon les revendications 15 à 16, caractérisé en ce qu'au dispositif de transfert de files (6) correspond, pour chaque gouttière de réception de couvercles (8, 8'), une lame (15) supérieure soumise à l'action d'un ressort, séparant la section (17), qui est fixée au bâti de base (12) par son attache (42).

18. Dispositif selon les revendications 15 à 17, caractérisé en ce qu'au dispositif de transfert de files (6) correspond, pour chaque gouttière de réception de couvercles, deux lames latérales (16) fixées à une bielle mobile (17), séparant la section de file (7) et l'amenant dans une position de prélèvement, en même temps que la bielle mobile.

19. Dispositif selon les revendications 15 à 18, caractérisé en ce que le déplacement de la bielle mobile (17) est effectué par un vérin pneumatique (43).

20. Dispositif selon les revendications 15 à 19, caractérisé en ce que la séparation de la section de files (7) est effectuée par la transmission d'impulsions d'un interrupteur fin de course (44).

21. Dispositif selon les revendications 15 à 20, caractérisé en ce que le mouvement de pivotement du bras de chargement (14) est commandé par un vérin pneumatique (45) à double effet.

22. Dispositif selon les revendications 15 à 21, caractérisé en ce que la barre de transfert de couvercles (41) comporte des lames terminales (46) pour saisir les extrémités libres de la section de file (7).

23. Dispositif selon les revendications 15 à 22, caractérisé en ce que des vérins d'appui pneumatiques (27) s'appuyant sur le bâti de base (12) sont prévus dans la zone de chaque poche de logement de files (9) du châssis à grilles (3, 18) à remplir.

24. Dispositif selon les revendications 15 à 23, caractérisé en ce que, lorsque plusieurs gouttières de réception de couvercle (8, 8') sont utilisées, des déclencheurs (48) sont affectés à chacune d'elle, dans la zone du dispositif de transfert de files (6), pour commander le bras de chargement (14) selon le remplissage de chaque gouttière.

25. Dispositif selon la revendication 7, caractérisé en ce qu'un tourillon sur deux (49) de la chaîne à rouleaux (24) du transporteur de chargement transversal (25) est réalisé sous la forme d'une fusée d'essieu (50) prolongée extérieurement et sert, en coopération avec un déclencheur (51) placé sur le bâti de base (12), à délivrer des impulsions rythmant le déplacement de la chaîne à rouleaux.

26. Dispositif selon les revendications 7 à 25, caractérisé en ce que la distance des grilles du châssis à grilles (3, 18') est réglée sur le pas de la chaîne à rouleaux (24).

27. Dispositif selon les revendications 7, 25 et 26, caractérisé en ce que, selon la longueur d'un châssis à grilles (3, 18), les fusées d'essieu (15) présentes sur la chaîne à rouleaux (24) sont supprimées pour obtenir un cycle de transport sans obstacles du châssis à grilles rempli.

28. Dispositif selon la revendication 7, caractérisé en ce qu'il comporte un dispositif d'exploration correspondant à chaque poche de logement de files individuelle (9) pour délivrer des impulsions rythmant le mouvement de la chaîne à rouleaux (24).

FIG.1

0 101 837

FIG.2

FIG.3

FIG.4

0 101 837

FIG.5

FIG. 6

# FIG.7

FIG.8

FIG.9

FIG.10

14

45

12

41

46

8'

8

9

59

XI

XI

49

25

50

51

FIG.11

27